(19) Europäisches Patentamt
European Patent Office
Office européen des brevets

(11) **EP 1 772 805 A2**

(12) **DEMANDE DE BREVET EUROPEEN**

(43) Date de publication:
**11.04.2007 Bulletin 2007/15**

(51) Int Cl.:
***G06F 11/28*** *(2006.01)*

(21) Numéro de dépôt: **06003810.6**

(22) Date de dépôt: **24.02.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **05.04.2005 FR 0503331**

(71) Demandeur: **STMICROELECTRONICS SA**
**92120 Montrouge (FR)**

(72) Inventeurs:
• **Bancel, Frédéric**
**13113 Lamanon (FR)**
• **Berard, Nicolas**
**Les Puits Sainte Marie**
**13530 Trets (FR)**

(74) Mandataire: **Marchand, André**
**OMNIPAT,**
**24 Place des Martyrs de la Résistance**
**13100 Aix-en-Provence (FR)**

(54) **Coprocesseur sécurisé comprenant un circuit de détection d' un évènement**

(57) L'invention concerne un coprocesseur comprenant un organe de calcul pour exécuter au moins une commande, et un dispositif de sécurisation (MU) selon l'invention. Le dispositif de sécurisation comprend un circuit de détection d'erreur (MCT, SCCT, COMP) pour surveiller l'exécution de la commande afin de détecter une erreur d'exécution éventuelle, placer le coprocesseur dans un mode d'erreur par défaut dès le commencement de l'exécution de la commande, et lever le mode d'erreur à la fin de l'exécution de la commande, si aucune erreur n'a été détectée, un circuit de détection d'événement (EVDET) pour surveiller l'apparition d'au moins un événement à détecter, et un circuit de masquage (MSKCT, AG2) pour masquer le mode d'erreur tant que l'événement à détecter ne se produit pas, et déclarer le mode d'erreur à l'extérieur du coprocesseur si l'événement à détecter se produit alors que le coprocesseur se trouve dans le mode d'erreur. Application notamment aux coprocesseurs embarqués dans les circuits intégrés pour cartes à puce.

Fig. 3

# EP 1 772 805 A2

**Description**

La présente invention concerne la protection des circuits intégrés contre les attaques par injection d'erreur, et notamment la protection des circuits intégrés présents dans les cartes à puce.

La présente invention concerne plus particulièrement un procédé pour sécuriser l'exécution d'une commande par un coprocesseur.

Ces dernières années, les techniques de piratage des circuits intégrés sécurisés à microprocesseur (microprocesseurs, microcontrôleurs, mémoires à microprocesseur, circuits intégrés à coprocesseurs...) ont considérablement évolué. A l'heure actuelle, les méthodes de piratage les plus avancées consistent à injecter des erreurs en des points déterminés d'un circuit intégré lors de l'exécution d'opérations dites sensibles, par exemple des opérations d'authentification ou des opérations d'exécution d'un algorithme de cryptographie. De telles attaques par injection d'erreur, appelées également attaques par injection de faute, permettent, en combinaison avec des modèles mathématiques, de déduire la structure d'un algorithme de cryptographie à logique câblée et/ou les clefs secrètes qu'il utilise. L'injection d'erreur peut être faite de diverses manières, en introduisant des perturbations ("glitches") dans la tension d'alimentation du circuit intégré, en introduisant des perturbations dans le signal d'horloge du circuit intégré, en exposant le circuit intégré à des radiations, etc.

Dans les circuits intégrés, les coprocesseurs sont fréquemment utilisés pour effectuer des calculs spécifiques. Un coprocesseur est généralement un élément périphérique de microprocesseur (intégré sur la même microplaquette de silicium) utilisé pour effectuer des calculs déterminés, notamment pour décharger le microprocesseur et/ou pour accélérer le temps d'exécution des calculs. A cet effet un coprocesseur comprend généralement une unité de calcul (appelée également "chemin de données"), un organe de contrôle de l'unité de calcul, et des registres permettant de charger des données d'entrée dans le coprocesseur, de configurer le coprocesseur, de récupérer les résultats des calculs et d'être informé de la fin des calculs. L'organe de contrôle est généralement une machine d'état ayant un nombre d'états déterminé ("finite state machine") qui pilote l'unité de calcul en fonction d'une commande reçue. L'ensemble est généralement réalisé en logique câblée, et se distingue donc d'un microprocesseur en ce qu'il n'est pas prévu pour exécuter un programme composé de codes-instructions mais seulement pour exécuter un nombre déterminé de commandes correspondant chacune à un calcul déterminé.

Or, dans les circuits intégrés sécurisés tels que ceux incorporés dans les cartes à puce, les coprocesseurs sont fréquemment utilisés pour effectuer des calculs "sensibles", notamment des calculs cryptographiques, et manipulent ainsi des clés secrètes. Ils sont donc principalement visés par les attaques par injection d'erreur. La détection d'une injection d'erreur dans un coprocesseur est ainsi une mesure essentielle pour garantir un haut niveau de sécurité aux circuits intégrés sécurisés.

On connaît déjà, notamment par EP 1 161 725, un procédé de surveillance de l'exécution d'un programme, consistant à produire des signatures cumulatives qui sont fonction des codes-instructions qui défilent dans le registre d'instructions d'un microprocesseur. Un tel procédé permet de détecter un déraillement du programme en cours d'exécution, dû notamment à une injection d'erreur, mais ne s'applique pas à un coprocesseur à logique câblée n'exécutant pas des codes-instructions mais réalisant des séquences de calcul prédéfinies par des commandes. De plus, la détection d'un déraillement dans l'exécution d'un programme par un microprocesseur ne permet pas de détecter une attaque du coprocesseur associé, du fait que celui-ci traite chaque commande émise par le microprocesseur sans interagir avec ce dernier tant que le traitement de la commande n'est pas achevé.

Une méthode classique permettant de détecter une attaque dirigée contre un coprocesseur consiste à répéter plusieurs fois une séquence de calcul effectuée par le coprocesseur, puis de comparer les résultats obtenus. Si ces résultats sont identiques, il vient qu'aucune attaque n'est intervenue. De cette manière, pour réussir une attaque, il faut que l'injection d'erreur soit répétée plusieurs fois, et d'une manière identique dans ses effets et au niveau temporel. Cette méthode conduit toutefois à multiplier les temps de calcul par le nombre d'itérations, ce qui constitue un inconvénient majeur. En outre, si la mise en évidence d'une erreur est liée à l'état d'une machine d'état, l'injection d'une faute peut conduire à sauter un état, et donc au masquage de l'erreur.

Une autre méthode classique consiste à prévoir un circuit logique dédié à la détection des injections d'erreurs. En ce qui concerne l'unité de calcul du coprocesseur, qui n'a pas de propriété déterministe puisque les données qui y transitent ne sont pas prévisibles, ce circuit logique dédié est formé par des chemins de données redondants dans le bloc de calcul, qui compare à la volée l'identité des signaux dans les chemins redondants. La détection d'une différence entre deux signaux redondants déclenche l'activation d'un signal d'erreur. En ce qui concerne l'organe de contrôle du coprocesseur, qui présente généralement un aspect déterministe, on utilise un circuit de signature qui calcule pendant toute la durée de l'opération effectuée par le coprocesseur, une signature à partir de certains signaux de contrôle commandant l'unité de calcul. En fin de calcul, la signature calculée est comparée avec une signature attendue, et si une différence est détectée, révélant une injection d'erreur, un signal d'alarme est activé. Or la comparaison, qu'elle soit réalisée de manière logicielle ou par un circuit, peut être court-circuitée par une injection d'erreur appropriée. Cette méthode présente donc une faille.

La présente invention a pour but de remédier à cet inconvénient.

A cet effet, une première idée de l'invention est de placer le coprocesseur dans un mode d'erreur par défaut dès le commencement de l'exécution d'une commande, et de maintenir le mode d'erreur tant que le bon déroulement de l'exécution de la commande n'est pas confirmé, y compris lorsque l'exécution de la commande est terminée si elle ne s'est pas déroulée de façon attendue.

Une autre idée de l'invention est de déclarer le mode d'erreur au milieu extérieur au coprocesseur (généralement un microprocesseur) si un événement se réalise alors que le coprocesseur se trouve dans le mode d'erreur. Cet événement peut être simplement l'arrêt de l'exécution de la commande, qui peut être détecté par un drapeau de disponibilité/ occupation. Toutefois, une injection volontaire d'erreur dans un coprocesseur est généralement accompagnée d'un événement provoqué par le fraudeur. Cet événement est souvent une lecture d'un registre du coprocesseur, notamment un registre de sortie, afin d'examiner l'effet de l'injection d'erreur sur le coprocesseur et découvrir les données secrètes qu'il utilise. Ainsi, encore une autre idée de l'invention est de déclarer le mode d'erreur au "milieu extérieur" sur détection d'un événement considéré comme potentiellement "suspect", par exemple la lecture d'un registre de sortie du coprocesseur.

Ainsi, la présente invention prévoit un procédé pour sécuriser l'exécution d'une commande par un coprocesseur, comprenant des étapes consistant à placer le coprocesseur dans un mode d'erreur par défaut dès le commencement de l'exécution de la commande, surveiller l'exécution de la commande afin de détecter une erreur d'exécution éventuelle, à la fin de l'exécution de la commande, lever le mode d'erreur si aucune erreur n'a été détectée dans l'exécution de la commande, sinon maintenir le mode d'erreur, et déclarer le mode d'erreur à l'extérieur du coprocesseur si un événement déterminé se produit alors que le coprocesseur se trouve dans le mode d'erreur.

Selon un mode de réalisation, le coprocesseur est placé dans le mode d'erreur en portant un signal d'erreur interne représentatif du mode d'erreur à un état actif, le mode d'erreur est levé en portant le signal d'erreur à un état inactif, et le mode d'erreur est déclaré en fournissant à l'extérieur du coprocesseur un signal d'erreur externe qui recopie l'état du signal d'erreur interne.

Selon un mode de réalisation, le procédé comprend une étape de vérification que le coprocesseur est dans le mode d'erreur avant que le processeur ne commence à traiter la commande, puis de forçage du mode d'erreur et de déclaration du mode d'erreur à l'extérieur du coprocesseur si le mode d'erreur n'est pas détecté.

Selon un mode de réalisation, l'événement déterminé comprend une tentative d'accès à au moins un registre du coprocesseur.

Selon un mode de réalisation, le procédé comprend la production, en synchronisation avec un signal d'horloge, d'une signature cumulative courante qui est fonction d'une signature cumulative précédente et de signaux logiques déterministes prélevés dans le coprocesseur, jusqu'à l'obtention d'une signature cumulative finale au terme de l'exécution de la commande, la comparaison de la signature cumulative courante ou finale avec une signature attendue, et le maintien du mode d'erreur tant que la signature cumulative courante est différente de la signature attendue.

Selon un mode de réalisation, une nouvelle signature cumulative courante est produite à chaque cycle du signal d'horloge.

Selon un mode de réalisation, les signaux logiques déterministes comprennent des signaux de contrôle appliqués à un organe de calcul du coprocesseur par un organe de contrôle de l'organe de calcul.

Selon un mode de réalisation, la signature cumulative courante est produite par un registre à décalage à contre-réaction linéaire.

Selon un mode de réalisation, la signature attendue est lue dans un registre dédié du coprocesseur.

Selon un mode de réalisation, la signature attendue est sélectionnée parmi une pluralité de signatures attendues correspondant chacune à une commande exécutable par le coprocesseur.

L'invention concerne également un coprocesseur comprenant un organe de calcul pour exécuter au moins une commande, et un dispositif de sécurisation comportant : un circuit de détection d'erreur pour surveiller l'exécution de la commande afin de détecter une erreur d'exécution éventuelle, placer le coprocesseur dans un mode d'erreur par défaut dès le commencement de l'exécution de la commande, et lever le mode d'erreur à la fin de l'exécution de la commande, si aucune erreur n'a été détectée, un circuit de détection d'événement pour détecter l'apparition d'au moins un événement déterminé, et un circuit de masquage pour masquer le mode d'erreur tant que l'événement déterminé ne se produit pas, et déclarer le mode d'erreur à l'extérieur du coprocesseur si l'événement déterminé se produit alors que le coprocesseur se trouve dans le mode d'erreur.

Selon un mode de réalisation, le circuit de détection d'erreur place le coprocesseur dans le mode d'erreur en portant un signal d'erreur interne représentatif du mode d'erreur à un état actif, lève le mode d'erreur en portant le signal d'erreur à un état inactif, et déclare le mode d'erreur en fournissant à l'extérieur du coprocesseur un signal d'erreur externe qui recopie l'état du signal d'erreur interne.

Selon un mode de réalisation, deux états identiques des signaux d'erreur interne et externe sont codés par une seule et même valeur logique.

Selon un mode de réalisation, un moyen à mémoire maintient le signal d'erreur externe dans l'état actif lorsque celui-ci a basculé dans l'état actif.

Selon un mode de réalisation, le circuit de détection d'événement fournit un signal de détection placé par défaut à un état inactif et porté à un état actif lorsque l'événement déterminé est détecté, et le circuit de masquage comprend un circuit logique qui masque le mode d'erreur quand le signal de détection est dans l'état inactif, et qui devient transparent au mode d'erreur quand le signal de détection est dans l'état actif.

Selon un mode de réalisation, le coprocesseur comprend des registres et le circuit de détection d'événement est agencé pour détecter une tentative d'accès à au moins un registre du coprocesseur.

Selon un mode de réalisation, le coprocesseur comprend un organe de contrôle agencé pour vérifier que le coprocesseur est dans le mode d'erreur avant que le processeur ne commence à traiter la commande, pour forcer le mode d'erreur et le déclarer à l'extérieur du coprocesseur si le mode d'erreur n'est pas détecté.

Selon un mode de réalisation, le circuit de détection d'erreur comprend un circuit de calcul de signature fournissant une signature cumulative courante qui est fonction de signaux logiques déterministes prélevés dans le coprocesseur et d'une signature cumulative précédente, jusqu'à l'obtention d'une signature cumulative finale au terme de l'exécution de la commande, et un circuit de comparaison de la signature cumulative courante et d'une signature attendue, dont la sortie place le coprocesseur dans le mode d'erreur tant que la signature cumulative est différente de la signature attendue.

Selon un mode de réalisation, le circuit de calcul de signature est cadencé par un signal d'horloge et calcule une signature cumulative courante à chaque cycle d'horloge, en remplaçant chaque signature cumulative précédente par une nouvelle signature cumulative courante.

Selon un mode de réalisation, le circuit de calcul de signature comprend un registre à décalage à contre-réaction linéaire.

Selon un mode de réalisation, l'organe de calcul est piloté par un organe de contrôle produisant les signaux de contrôle déterministes appliqués en entrée du circuit de calcul de signature.

Selon un mode de réalisation, le coprocesseur comprend un registre dédié pour stocker la signature attendue.

Selon un mode de réalisation, le dispositif de sécurisation sélectionne la signature attendue parmi une pluralité de signatures attendues préenregistrées correspondant chacune à une commande exécutable par le coprocesseur.

Ces objets, caractéristiques et avantages ainsi que d'autres de la présente invention seront exposés plus en détail dans la description suivante du procédé selon l'invention et d'un exemple de mise en oeuvre de ce procédé, faite à titre non limitatif en relation avec les figures jointes parmi lesquelles :

- la figure 1 représente schématiquement un exemple d'architecture de circuit intégré à microprocesseur comprenant un coprocesseur,
- la figure 2 représente sous forme de blocs un exemple d'architecture de coprocesseur comprenant un dispositif de sécurisation selon l'invention,
- la figure 3 représente sous forme de blocs un exemple de réalisation du dispositif de sécurisation de la figure 2, et
- la figure 4 représente un exemple de réalisation d'un élément présent dans le dispositif de sécurisation de la figure 3.

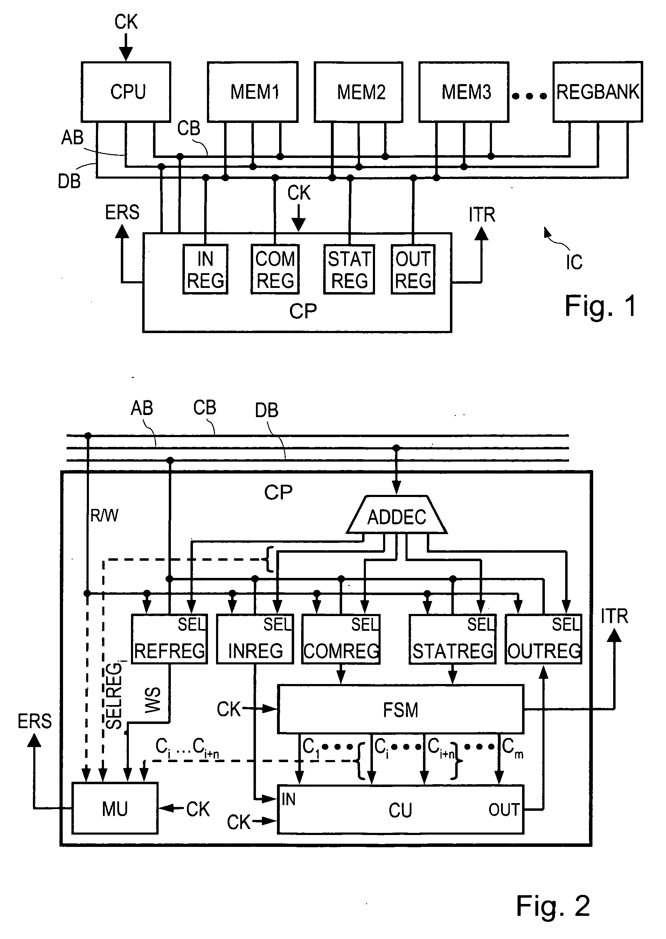

La figure 1 représente un exemple d'architecture de circuit intégré IC dans lequel l'invention est mise en oeuvre. Le circuit intégré IC est ici du type microprocesseur ou microcontrôleur et comprend une unité centrale de traitement CPU cadencée par un signal d'horloge CK, et des éléments périphériques du CPU. Ces éléments périphériques comprennent ici des mémoires MEM1, MEM2, MEM3, une banque de registres REGBANK, et un coprocesseur CP, dédié par exemple au calcul cryptographique. La mémoire MEM1 est par exemple une mémoire non volatile de type ROM (mémoire morte), la mémoire MEM2 une mémoire effaçable et programmable électriquement de type EEPROM, et la mémoire MEM3 une mémoire volatile de type RAM.

Ces divers éléments périphériques sont reliés au CPU par un bus de données DB, un bus d'adresse AB, ainsi qu'un bus de contrôle CB. On désigne par "bus de contrôle" un ensemble de fils véhiculant des signaux de sélection ou d'information émis par le CPU à l'attention des éléments périphériques, ou vice-versa. Le bus CB véhicule notamment des signaux de sélection des éléments périphériques, un signal R/W de lecture ou écriture, ainsi qu'un signal FETCH émis par le CPU lors de la lecture d'un code-instruction dans l'une des mémoires programme, par exemple MEM1 ou MEM2.

Le coprocesseur CP comprend plusieurs registres reliés au bus de données DB, par exemple des registres d'entrée INREG et de sortie OUTREG permettant d'échanger des données avec le CPU, un registre de commande COMREG pour recevoir du CPU une commande à exécuter, et un registre d'état STATREG fournissant au CPU des informations sur l'état du coprocesseur et permettant également au CPU d'agir sur le coprocesseur. Le registre STATREG comprend notamment un bit RB (Ready/Busy) permettant au CPU de déterminer si le coprocesseur est occupé ou prêt à recevoir une nouvelle commande à exécuter, et un bit RUN permettant au CPU de lancer l'exécution d'une commande une fois que celle-ci a été chargée dans le registre COMREG. Ainsi, au lancement de l'exécution d'une commande, le CPU charge la commande dans le registre COMREG, positionne le bit RUN à une valeur déterminé, puis le coprocesseur positionne le bit RB du registre d'état STATREG à l'état logique "occupé" (Busy) et démarre l'exécution de la commande. Lorsque le traitement de la commande est terminé, le coprocesseur positionne le bit RB à l'état logique "prêt" (Ready) et réinitialise le bit RUN. En surveillant périodiquement l'état du bit RB, le CPU peut donc déterminer quand le coprocesseur a terminé l'exécution d'une commande. Alternativement, le coprocesseur peut émettre un signal d'interruption ITR lorsqu'il a terminé de traiter une commande, ce signal étant appliqué à une entrée du décodeur d'interruption du CPU.

Comme cela apparaît en figure 2, ces divers registres sont contrôlés par un décodeur d'adresse ADDEC qui est relié en entrée au bus d'adresse AB et fournit des signaux SELREGi de sélection de l'un des registres en fonction d'une adresse transmise sur le bus AB, chacun de ces signaux de sélection étant appliqué à une entrée de sélection SEL du registre correspondant. Un signal de lecture/écriture R/W prélevé sur le bus de contrôle CB est également appliqué à chacun des registres, pour sélectionner un mode d'accès aux registres, en écriture ou en lecture.

Selon l'invention, le coprocesseur comprend un dispositif de sécurisation MU (fig. 2) conçu pour surveiller le fonctionnement du coprocesseur pendant l'exécution d'une commande, afin de détecter une anomalie dans son exécution, due notamment à une injection d'erreur, et pour surveiller simultanément certains signaux reçus par le coprocesseur afin de détecter un événement déterminé.

Pour éviter que la détection d'une erreur soit masquée par une injection d'erreur, le dispositif de sécurisation MU place le coprocesseur dans un mode d'erreur dès le début de l'exécution d'une commande, tout en masquant le mode d'erreur vis-à-vis du milieu extérieur (ici le CPU) tant que l'événement à détecter ne se produit pas. Le mode d'erreur est désactivé par le dispositif MU à la fin de l'exécution de la commande, si aucune erreur d'exécution n'a été détectée pendant cette exécution.

Lorsque l'événement à détecter se produit alors que le coprocesseur se trouve dans le mode d'erreur, le mode d'erreur est déclaré au milieu extérieur en portant un signal d'erreur externe ERS à une valeur active. Sur réception ou détection du signal d'erreur externe ERS à la valeur active, toute mesure appropriée peut être prise, comme la remise à zéro du CPU, l'effacement de données sensibles dans l'une des mémoires, voire la mise hors service définitive du circuit intégré.

Selon le mode de réalisation représenté en figure 2, l'événement à détecter consiste en une tentative de lecture d'un ou de plusieurs registres, notamment le registre de sortie OUTREG. A cet effet, le dispositif MU reçoit le signal R/W de sélection d'écriture ou de lecture transmis par le bus de contrôle CB, et tout ou partie des signaux SELREG$_i$ de sélection de registres fournis par le décodeur d'adresse ADDEC, plus particulièrement ceux correspondant aux registres dont l'accès en lecture doit être surveillé.

L'exécution des commandes fournies par le CPU est assurée classiquement par un bloc de contrôle FSM et une unité de calcul CU pilotée par le bloc de contrôle FSM, ces éléments étant réalisés en logique câblée. Le bloc de contrôle FSM est classiquement une machine d'état à états finis cadencée par un signal d'horloge, ici le signal d'horloge CK du CPU. Le bloc FSM est agencé pour déterminer un état courant en fonction d'un état précédent et de signaux d'entrée provenant notamment des registres COMREG et STATREG. Chaque état du bloc de contrôle FSM est déterminé par un ensemble de signaux de contrôle $C_1$ à $C_m$ qui est appliqué en tout ou en partie à l'unité de calcul CU. Celle-ci traite des données d'entrée provenant du registre d'entrée INREG en fonction des signaux de contrôle et délivre des données de sortie qui sont inscrites dans un ou plusieurs registres du coprocesseur, notamment dans le registre de sortie OUTREG. En fin de calcul correspondant au traitement d'une commande, le bloc de contrôle FSM positionne le bit RB (Ready/Busy) à l'état logique "prêt" et/ou active le signal d'interruption ITR pour indiquer au CPU que le traitement est terminé.

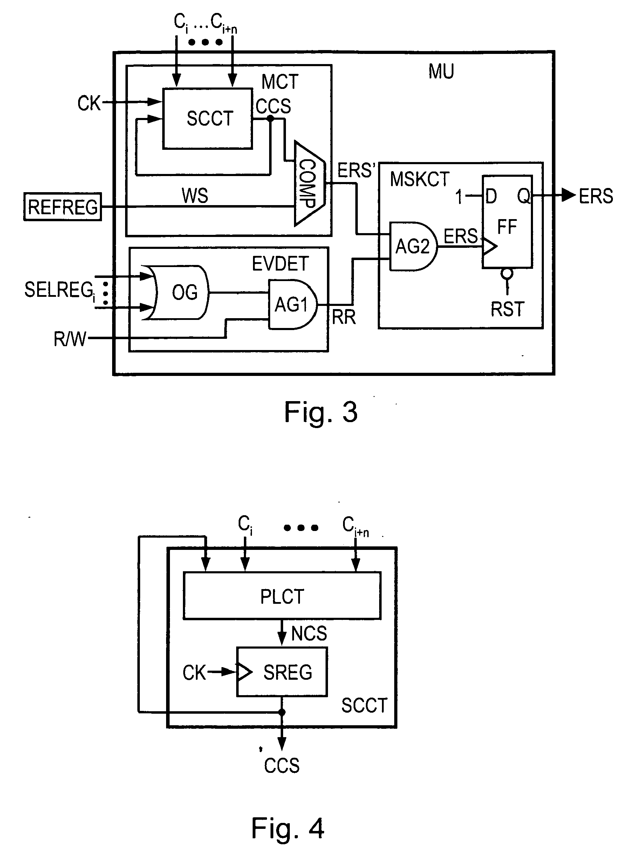

La figure 3 représente un exemple de réalisation du dispositif de sécurisation MU. Celui-ci comprend un circuit de détection d'erreur MCT, un circuit de détection d'événement EVDET, et un circuit MSKCT de masquage du mode d'erreur. Pour la compréhension du schéma, on notera que l'état actif des divers signaux décrits dans ce qui suit correspond ici par convention à la valeur logique "1".

Le circuit de détection d'erreur MCT surveille le déroulement de l'exécution d'une commande et fournit dès le commencement de l'exécution de la commande, un signal d'erreur interne ERS' qui présente un état actif représentatif du mode d'erreur, et un état inactif représentatif de la levée du mode d'erreur.

Le circuit MCT comprend à cet effet un circuit de calcul de signature SCCT à logique câblée recevant sur des entrées parallèles des signaux logiques déterministes $C_i$ à $C_{i+n}$. Ces signaux $C_i$ à $C_{i+n}$ sont sélectionnés ici parmi les signaux de contrôle $C_1$ à $C_m$ fournis par le bloc de contrôle FSM (fig.2) et sont déterministes (prédictibles) en ce qu'ils ne dépendent que de la commande qu'exécute le coprocesseur. Le circuit SCCT comporte une sortie qui est renvoyée sur l'une de ses entrées et qui fournit une signature cumulative courante CCS. Chaque signature cumulative courante CCS est ainsi fonction des signaux $C_i$ à $C_{i+n}$ et d'une signature cumulative précédente. Le calcul des signatures est effectué au rythme d'un signal d'horloge, par exemple le signal d'horloge CK du CPU. La signature cumulative courante CCS est appliquée à une entrée d'un comparateur COMP dont l'autre entrée reçoit une signature attendue WS. Le comparateur comporte une sortie inverseuse qui fournit le signal d'erreur interne ERS', de sorte que celui-ci reste égal à 1 (état actif, mode d'erreur) tant que la signature courante calculée CCS est différente de la signature attendue WS.

Ainsi, le circuit MCT place par défaut le coprocesseur dans le mode d'erreur (ERS'=1) tant que le traitement de la commande ne s'est pas terminée. Le mode d'erreur est par ailleurs maintenu lorsque le traitement de la commande est terminé, si une erreur d'exécution a été détectée (car la signature attendue n'est pas obtenue).

La signature attendue WS est enregistrée dans un moyen de stockage quelconque, ici un registre supplémentaire REFREG du coprocesseur auquel le circuit MCT est relié (fig.2 et fig. 3). Cette signature étant fonction de la commande à exécuter, elle peut être inscrite dans le registre REFREG par le CPU lui-même avant l'activation du coprocesseur (déclenché par le positionnement du bit RUN). Alternativement, le moyen de stockage de la signature WS peut être une table ou un ensemble de registres du coprocesseur dans lequel sont préenregistrées diverses signatures attendues correspondant chacune à une commande d'un jeu de commandes du coprocesseur. Dans ce cas, l'une des signatures attendues est sélectionnée dans la table ou dans un des registres spécifiques lorsqu'une commande est chargée dans le registre COMREG.

Le circuit de détection d'événement EVDET fournit un signal RR qui est dans l'état actif quand l'événement sous surveillance est détecté, ici une tentative de lecture d'un registre du coprocesseur. A cet effet, il comprend une porte OG de type OU à plusieurs entrées et une porte AG1 de type ET à deux entrées. La porte OG reçoit les signaux de sélection $SELREG_i$ des registres du coprocesseur dont l'accès en lecture est à surveiller, et sa sortie passe à 1 lorsque l'un des registres sous surveillance est sélectionné par le décodeur d'adresse ADDEC (fig. 2). La sortie de la porte OG est appliquée sur une entrée de la porte AG1 dont l'autre entrée reçoit le signal R/W décrit plus haut et dont la sortie fournit le signal RR. Le signal R/W étant ici par convention égal à 1 pour un accès en lecture, le signal RR passe à 1 (valeur active) lorsqu'une tentative d'accès en lecture à certains registres est détectée.

Le circuit de masquage MSKCT reçoit le signal d'erreur interne ERS' et le signal de détection RR, et fournit le signal d'erreur externe ERS. Le signal ERS est dans l'état actif lorsque le mode d'erreur est déclaré au milieu extérieur au coprocesseur (ici le CPU), et l'état inactif lorsque le mode d'erreur est masqué. A cet effet, le circuit MSKCT comprend une porte AG2 de type ET recevant sur ses entrées le signal ERS' et le signal RR, et fournissant le signal d'erreur externe ERS. Ainsi, quand le signal d'erreur interne ERS' est à 1 (valeur active, mode d'erreur) le signal ERS reste à 0 (mode d'erreur masqué) tant que le signal RR est à 0 (pas de détection d'une tentative d'accès en lecture à un registre sous surveillance). Le passage à 1 du signal ERS indique ainsi qu'une tentative d'accès à un registre sous surveillance s'est produite (RR=1) alors que la signature attendue WS n'est pas atteinte (ERS'=1) ou n'a pas été atteinte au terme de l'exécution de la commande. Le basculement du signal d'erreur ERS de l'état inactif à l'état actif est de préférence mémorisé par le circuit MSKCT. Cette mémorisation est assurée ici par une bascule FF comprenant une entrée D, une sortie non inverseuse Q et une entrée d'horloge H. La valeur logique 1 est appliquée en permanence à l'entrée D, le signal d'erreur externe ERS est appliqué à l'entrée H et est récupéré sur la sortie Q pour être envoyé au milieu extérieur. Ainsi, le passage à 1 du signal d'erreur ERS provoque le passage à 1 de la sortie Q, qui recopie l'entrée D. De cette manière, le signal d'erreur ERS est recopié de façon stable lorsque le signal d'erreur ERS sur l'entrée H passe à 1 de façon fugitive suite à une tentative d'accès à un registre sous surveillance alors que la signature attendue WS n'est pas encore atteinte ou n'a pas été atteinte au terme de l'exécution de la commande. Afin de réinitialiser le dispositif après traitement d'une erreur, la bascule FF reçoit un signal de remise à zéro RST qui est activé après traitement de l'erreur.

En résumé, tant que le traitement de la commande par le coprocesseur n'est pas terminé, la signature calculée est différente de la valeur attendue et le coprocesseur se trouve par défaut dans le mode d'erreur. Si une tentative de lecture est effectuée sur l'un des registres sous surveillance pendant le temps d'exécution de la commande, le mode d'erreur est déclaré en portant le signal d'erreur externe ERS à sa valeur active. En fin de traitement exécuté par le coprocesseur, si le traitement de la commande effectué par le coprocesseur n'a pas été perturbé, notamment par une injection d'erreur, la signature calculée est normalement égale à la signature attendue, le coprocesseur sort alors du mode d'erreur. Dans le cas contraire, la signature calculée en fin de traitement est différente de la signature attendue et le mode d'erreur n'est pas levé. Toute tentative d'accès à un registre sous surveillance déclenche alors le passage à l'état actif du signal d'erreur externe ERS, et ce malgré le fait que l'exécution de la commande soit achevée.

Comme indiqué plus haut, le passage du signal d'erreur externe ERS à l'état actif provoque un arrêt ou une remise à zéro du CPU ou toute autre mesure d'urgence connue de l'homme de l'art.

Il est à noter que si le CPU doit détecter la fin du traitement effectué par le coprocesseur en lisant périodiquement le registre d'état STATREG, il doit pouvoir accéder au registre STATREG sans que cela n'active le signal d'erreur externe. Ainsi, le signal de sélection $SELREG_i$ correspondant à ce registre ne doit pas être appliqué au circuit de détection EVDET.

Comme représenté sur la figure 4, le circuit de calcul de signature SCCT est par exemple un registre à décalage à contre réaction linéaire LSFR (Linear Feedback Shift Register). I1 comprend un circuit logique PLCT et un registre de signature SREG à entrée et sortie de type parallèle. Le circuit PLCT exécute une fonction de signature Fs et comprend des entrées recevant les signaux de contrôle $C_i$ à $C_{i+n}$ ainsi qu'une entrée recevant une signature cumulative courante CCS. La sortie du circuit PLCT fournit à l'entrée du registre SREG une signature cumulative suivante NCS qui est fonction de la signature cumulative courante CCS et des signaux appliqués sur ses autres entrées, soit :

$$NCS = Fs(CCS, C_i, ..., C_{i+n}) \qquad (1)$$

A chaque nouveau cycle d'horloge CK, le registre SREG recopie sur sa sortie la signature présente sur son entrée, de sorte que la signature suivante fournie par le circuit PLCT au cours du cycle d'horloge précédent devient la signature courante, et que la signature courante du cycle d'horloge précédent devient la signature précédente PCS pour la signature suivante, soit :

$$CCS = Fs(PCS, C_i, ..., C_{i+n}) \qquad (2)$$

la relation (2) étant équivalente à la relation (1) vue depuis la sortie du registre SREG.

Dans un souci de simplicité, divers signaux dont la prévision est à la portée de l'homme de l'art n'ont pas été décrits dans ce qui précède, seuls les signaux nécessaires à la compréhension de l'invention ayant été mentionnés.

Il apparaîtra clairement à l'homme de l'art que l'invention est susceptible de diverses variantes de réalisation et perfectionnements.

Notamment, bien que l'on ait décrit dans ce qui précède le dispositif de sécurisation MU comme un élément distinct du bloc de contrôle FSM, celui-ci peut être intégré dans le bloc de contrôle et des fonctionnalités supplémentaires peuvent être prévues en relation avec la sécurité. Notamment, dans un mode de réalisation, le bloc FSM est agencé pour vérifier que le signal d'erreur interne ERS' est bien à la valeur active avant d'initier l'exécution d'une commande. Si cela n'est pas le cas, le bloc FSM force à la valeur active le signal d'erreur externe ERS et se place lui-même dans un état déterminé d'où il ne peut sortir qu'après une réinitialisation complète du coprocesseur.

D'autre part, il va de soi que les valeurs logiques décrites plus haut correspondant à l'état actif des signaux d'erreur ERS', ERS n'ont qu'une valeur relative. D'autres valeurs peuvent être retenues, par exemple la valeur "1" pour l'état actif du signal d'erreur interne ERS' et la valeur "0" pour l'état actif du signal d'erreur externe ERS. Dans ce cas, le signal ERS doit être mis à 0 lorsque le signal ERS' est à 1, puisque ce n'est pas la valeur logique qui est recopiée mais l'état actif ou inactif du signal d'erreur interne auquel est associé par convention une valeur logique qui peut être différente pour le signal d'erreur interne et pour le signal d'erreur externe.

Par ailleurs, il est à la portée de l'homme de l'art de prévoir divers autres modes de réalisation d'un dispositif de sécurisation permettant de porter par défaut le coprocesseur dans un mode d'erreur, et de déclarer le mode d'erreur au milieu extérieur lorsque les conditions décrites plus haut sont remplies. Ainsi, bien que l'on ait décrit dans ce qui précède un exemple de gestion du mode d'erreur interne reposant sur l'utilisation d'un signal d'erreur interne qui est communiqué au milieu extérieur en tant que signal d'erreur externe lorsque les conditions prévues sont réunies, la déclaration au milieu extérieur du mode d'erreur interne peut être obtenue de diverses autres manières. Par exemple, le dispositif de sécurisation MU peut agir sur des drapeaux (flags) spécifiques prévus dans le registre d'état STATREG du coprocesseur, comme un drapeau représentatif du mode d'erreur et un drapeau indiquant si l'événement à surveiller a été détecté. Un dispositif d'alarme extérieur au coprocesseur peut être affecté à la surveillance permanente ou non de ces drapeaux et émettre lui-même le signal d'erreur externe. Ce dispositif externe peut par ailleurs être programmable selon plusieurs niveaux de sécurité, pour conduire ou déclencher des actions spécifiques lorsque les conditions d'erreur sont remplies, en fonction d'un niveau de sécurité qui lui a été communiqué par le CPU.

Le contrôle du bon déroulement de l'exécution de la commande peut par ailleurs être effectué de diverses manières, par exemple en appliquant des techniques de contrôle évoquées au préambule, basées sur une redondance des chemins de données présents dans l'unité de calcul du coprocesseur, ou en combinant de telle technique avec celle basée sur une production de signatures fonction de signaux déterministes.

L'événement à surveiller peut consister en tout type d'événement en relation notamment avec une tentative de fraude, et n'est pas nécessairement une tentative de lecture d'un registre et l'identification des événements à mettre sous surveillance dépend bien entendu de l'architecture du coprocesseur et des opérations qui lui sont confiées. Il peut s'agir d'une tentative d'écriture d'un registre, une tentative d'accès à un organe du coprocesseur,... et de façon générale une action provenant de l'extérieur du coprocesseur et concernant le coprocesseur.

L'événement peut être aussi sans relation avec une tentative de fraude, et être simplement un événement dont l'occurrence est certaine après le traitement d'une commande, tel l'arrêt du processus d'exécution de la commande elle-même. Dans ce cas, un tel événement est utilisé pour déclarer au milieu extérieur le mode d'erreur, par analogie il sert de "gâchette" au système de sécurisation selon l'invention, qui est "armé" dès le commencement de l'exécution de la commande.

Egalement, plusieurs événements de types différents peuvent être mis simultanément sous surveillance, en déclenchant l'émission du signal d'erreur externe lors de l'apparition d'un événement parmi l'ensemble d'événement sous surveillance (fonction logique "OU") ou en déclenchant l'émission du signal d'erreur externe lors de l'apparition de tous les événements sous surveillance (fonction logique "ET").

Enfin, la notion de coprocesseur au sens de l'invention dont être comprise de façon non limitative. De façon générale, un coprocesseur au sens de l'invention est un circuit à logique câblée prévu pour exécuter des opérations spécifiques en réponse à une commande qui lui est fournie. Ainsi, peuvent être par exemple sécurisés au moyen de l'invention des circuits à logique câblée qui assurent le contrôle de bus de données ou d'adresse dans des microprocesseurs ou les microcontrôleurs ou qui contrôlent l'accès à des mémoires.

**Revendications**

1. Procédé pour sécuriser l'exécution d'une commande par un coprocesseur (CP), **caractérisé en ce qu'**il comprend des étapes consistant à :

   - placer le coprocesseur dans un mode d'erreur (ERS'=1) par défaut dès le commencement de l'exécution de la commande,
   - surveiller l'exécution de la commande afin de détecter une erreur d'exécution éventuelle,
   - à la fin de l'exécution de la commande, lever (ERS'=0) le mode d'erreur si aucune erreur n'a été détectée dans l'exécution de la commande, sinon maintenir le mode d'erreur (ERS'=1), et
   - déclarer le mode d'erreur à l'extérieur du coprocesseur si un événement déterminé se produit alors que le coprocesseur se trouve dans le mode d'erreur.

2. Procédé selon la revendication 1, dans lequel :

   - le coprocesseur est placé dans le mode d'erreur en portant un signal d'erreur interne (ERS') représentatif du mode d'erreur à un état actif (ERS'=1),
   - le mode d'erreur est levé en portant le signal d'erreur à un état inactif (ERS'=0), et
   - le mode d'erreur est déclaré en fournissant à l'extérieur du coprocesseur un signal d'erreur externe (ERS) qui recopie l'état du signal d'erreur interne (ERS').

3. Procédé selon l'une des revendications 1 et 2, comprenant une étape de vérification que le coprocesseur est dans le mode d'erreur avant que le processeur ne commence à traiter la commande, puis de forçage du mode d'erreur et de déclaration du mode d'erreur à l'extérieur du coprocesseur si le mode d'erreur n'est pas détecté.

4. Procédé selon l'une des revendications 1 à 3, dans lequel l'événement déterminé comprend une tentative d'accès à au moins un registre (OUTREG) du coprocesseur.

5. Procédé selon l'une des revendications 1 à 4, comprenant :

   - la production, en synchronisation avec un signal d'horloge (CK), d'une signature cumulative courante (CCS) qui est fonction d'une signature cumulative précédente (PCS) et de signaux logiques déterministes ($C_i$ à $C_{i+n}$) prélevés dans le coprocesseur, jusqu'à l'obtention d'une signature cumulative finale au terme de l'exécution de la commande,
   - la comparaison de la signature cumulative courante ou finale (CCS) avec une signature attendue (WS), et
   - le maintien du mode d'erreur (ERS'=1) tant que la signature cumulative courante est différente de la signature attendue (WS).

6. Procédé selon la revendication 5, dans lequel une nouvelle signature cumulative courante (CCS) est produite à chaque cycle du signal d'horloge (CK).

7. Procédé selon l'une des revendications 5 et 6, dans lequel les signaux logiques déterministes comprennent des signaux de contrôle ($C_i$ à $C_{i+n}$) appliqués à un organe de calcul (CU) du coprocesseur par un organe de contrôle (FSM) de l'organe de calcul (CU).

8. Procédé selon l'une des revendications 5 à 7, dans lequel la signature cumulative courante (CCS) est produite par un registre à décalage à contre-réaction linéaire (PLCT).

9. Procédé selon l'une des revendications 5 à 8, dans lequel la signature attendue (WS) est lue dans un registre dédié (REFREG) du coprocesseur.

10. Procédé selon l'une des revendications 5 à 8, dans lequel la signature attendue (WS) est sélectionnée parmi une pluralité de signatures attendues correspondant chacune à une commande exécutable par le coprocesseur (CP).

11. Coprocesseur (CP) comprenant un organe de calcul (CU) pour exécuter au moins une commande, **caractérisé en ce qu'**il comprend un dispositif de sécurisation (MU) comportant :

    - un circuit de détection d'erreur (MCT, SCCT, COMP) pour surveiller l'exécution de la commande afin de détecter une erreur d'exécution éventuelle, placer le coprocesseur dans un mode d'erreur (ERS'=1) par défaut dès le commencement de l'exécution de la commande, et lever (ERS'=0) le mode d'erreur à la fin de l'exécution de la commande, si aucune erreur n'a été détectée,
    - un circuit de détection d'événement (EVDET) pour détecter l'apparition d'au moins un événement déterminé, et
    - un circuit de masquage (MSKCT, AG2) pour masquer le mode d'erreur tant que l'événement déterminé ne se produit pas, et déclarer le mode d'erreur à l'extérieur du coprocesseur si l'événement déterminé se produit alors que le coprocesseur se trouve dans le mode d'erreur.

12. Coprocesseur selon la revendication 11, dans lequel le circuit de détection d'erreur (MCT, COMP) place le coprocesseur dans le mode d'erreur en portant un signal d'erreur interne (ERS') représentatif du mode d'erreur à un état actif (ERS'=1), lève le mode d'erreur en portant le signal d'erreur à un état inactif (ERS'=0), et déclare le mode d'erreur en fournissant à l'extérieur du coprocesseur un signal d'erreur externe (ERS) qui recopie l'état du signal d'erreur interne (ERS').

13. Coprocesseur selon la revendication 12, dans lequel deux états identiques des signaux d'erreur interne et externe sont codés par une seule et même valeur logique ("1).

14. Coprocesseur selon l'une des revendications 12 et 13, dans lequel un moyen à mémoire (FF) maintient le signal d'erreur externe (ERS) dans l'état actif lorsque celui-ci a basculé dans l'état actif.

15. Coprocesseur selon l'une des revendications 11 à 14, dans lequel :

    - le circuit de détection d'événement (EVDET) fournit un signal de détection (RR) placé par défaut à un état inactif et porté à un état actif (RR=1) lorsque l'événement déterminé est détecté, et
    - le circuit de masquage (MSKCT) comprend un circuit logique (AG2) qui masque le mode d'erreur (ERS'=1) quand le signal de détection (RR) est dans l'état inactif, et qui devient transparent au mode d'erreur quand le signal de détection (RR) est dans l'état actif.

16. Coprocesseur selon l'une des revendications 11 à 15, comprenant des registres (INREG, COMREG, STATREG, OUTREG) et dans lequel le circuit de détection d'événement (EVDET) est agencé pour détecter une tentative d'accès à au moins un registre (OUTREG) du coprocesseur.

17. Coprocesseur selon l'une des revendications 11 à 16, comprenant un organe de contrôle (FSM) agencé pour vérifier que le coprocesseur est dans le mode d'erreur avant que le processeur ne commence à traiter la commande, pour forcer le mode d'erreur et le déclarer à l'extérieur du coprocesseur si le mode d'erreur n'est pas détecté.

18. Coprocesseur selon l'une des revendications 11 à 17, dans lequel le circuit détection d'erreur (MCT) comprend :

    - un circuit (SCCT) de calcul de signature fournissant une signature cumulative courante (CCS) qui est fonction de signaux logiques déterministes (Ci à Ci+n) prélevés dans le coprocesseur et d'une signature cumulative précédente (PCS), jusqu'à l'obtention d'une signature cumulative finale au terme de l'exécution de la commande, et
    - un circuit de comparaison (COMP) de la signature cumulative courante (CCS) et d'une signature attendue (WS), dont la sortie place le coprocesseur dans le mode d'erreur (ERS'=1) tant que la signature cumulative est différente de la signature attendue (WS).

**19.** Coprocesseur selon la revendication 18, dans lequel le circuit de calcul de signature (SCCT) est cadencé par un signal d'horloge (CK) et calcule une signature cumulative courante (CCS) à chaque cycle d'horloge, en remplaçant chaque signature cumulative précédente par une nouvelle signature cumulative courante.

**20.** Coprocesseur selon l'une des revendications 18 et 19, dans lequel le circuit (SCCT) de calcul de signature comprend un registre à décalage à contre-réaction linéaire (PLCT).

**21.** Coprocesseur selon l'une des revendications 18 à 20, dans lequel l'organe de calcul (CU) est piloté par un organe de contrôle (FSM) produisant les signaux de contrôle déterministes (Ci à Ci+n) appliqués en entrée du circuit (SCCT) de calcul de signature.

**22.** Coprocesseur selon l'une des revendications 18 à 21, comprenant un registre dédié (REFREG) pour stocker la signature attendue (WS).

**23.** Coprocesseur selon l'une des revendications 18 à 22, dans lequel le dispositif de sécurisation (MU) sélectionne la signature attendue (WS) parmi une pluralité de signatures attendues préenregistrées correspondant chacune à une commande exécutable par le coprocesseur.

Fig. 1

Fig. 2

Fig. 3

Fig. 4

**RÉFÉRENCES CITÉES DANS LA DESCRIPTION**

**Documents brevets cités dans la description**

- EP 1161725 A